# EUROPÄISCHE PATENTSCHRIFT

(11) **EP 2 112 458 B1**
(45) Veröffentlichungstag und Bekanntmachung des Hinweises auf die Patenterteilung: **07.08.2013**
(21) Anmeldenummer: 09005498.2
(22) Anmeldetag: 20.04.2009
(51) Int. Cl.: G01B 5/00, G01B 5/06

(54) **Verfahren und Vorrichtung zur Prüfung der Maßgenauigkeiten von Trommelbremsbelägen**
Method and device for testing the dimensional accuracy of drum brake linings
Procédé et dispositif de contrôle de l'exactitude des mesures de garnitures de frein à tambour

(30) Priorität: 25.04.2008 DE 102008020972
(43) Veröffentlichungstag der Anmeldung: 28.10.2009
(73) Patentinhaber: Bremskerl-Reibbelagwerke Emmerling GmbH & Co. KG, 31629 Estorf (DE)
(72) Erfinder: Bauer, Edwin, 31515 Wunstorf (DE); Siedenberg, Nico, 27245 Barenburg (DE)
(74) Vertreter: Sroka, Peter-Christian

(56) Entgegenhaltungen:
- US-A- 4 107 849
- US-A- 6 105 422
- US-A1- 2005 198 849

## Beschreibung

Die Erfindung betrifft ein Verfahren und eine Vorrichtung zur Prüfung von Trommelbremsbelägen in Bezug auf die vorgegebenen Dickenmaße und Referenzwerte für die Innen- und Außenradien der Bremsbeläge und die lagegenauen Anordnungen des Bohrbildes im Belag.

Im allgemeinen werden die Merkmale und insbesondere die Maßgenauigkeiten von Nutzfahrzeug-Trommelbremsbelägen mit Hilfe von Schablonen und/oder Messschiebern überprüft. Eine Dickenmessung an den vorgegebenen Messstellen jeweils in einem festgelegten Abstand vom rechten und linken Bogenende erfolgt in der Regel mit einem Messschieber.

Die Prüfung des Außen- und Innenradius geschieht unter Anwendung des sogenannten Lichtspaltverfahrens unter zur Hilfenahme einer Schablone. Beim Lichtspaltverfahren wird zur Prüfung der Form eine Lehre mit der negativen Sollform an das Werkstück gehalten und beide werden gegen eine Lichtquelle betrachtet. Das Werkstück wird für gut befunden, wenn kein Spalt zwischen Lehre und Werkstück existiert, durch den Licht dringt. Wenn das Werkstück nicht der gewünschten Sollform entspricht, ist an den Auflagestellen zu erkennen, wo noch Material entfernt werden muss. Dieses "Lichtspaltverfahrens" ist einerseits aufwendig, und insbesondere dann nicht sehr aussagekräftig, wenn an sich Abweichungen zwischen der Lehre und dem Werkstück innerhalb bestimmter festgelegter Toleranzen tolerierbar sind. Bei Anwendung des Lichtspaltverfahrens ist auch keine quantifizierbare Aussage über die Radien und die Maßgenauigkeit möglich. Dabei kann lediglich eine Aussage "in Ordnung" oder "nicht in Ordnung" getroffen werden.

Das Bohrbild bei Trommelbremsbelägen wird üblicherweise durch Abstecken der Bremsbelag-Nietbohrungen auf einem Muster-Bremsbelag oder einer Musterschale überprüft. Dabei kann lediglich das Bohrbild der Nietbohrungen selbst, nicht jedoch die Lage des Bohrbildes bezogen auf die Mittelachse des Innenradius kontrolliert werden. Bei Bremsbelägen, bei denen die Mittelachsen von Innen- und Außendurchmesser nicht zusammenfallen (sogenanntes Dickenverhältnis), und damit die Dicke des Bremsbelages sich von dem einen Bogenende zu dem anderen Bogenende ändert, ist mit Hilfe der derzeitigen Messmethoden eine ordnungsgemäße Prüfung nicht möglich. Da für die Radien keine Messwerte geliefert werden, kann auch keine Beurteilung der Mittellinien bzw. deren Lage zueinander vorgenommen werden. Daher ist auch keine Überprüfung des sogenannten Dickenverhältnisses möglich. Eine statistische Aussage für den Fertigungsprozess bzw. die systematische Kontrolle während der Produktion ist damit ebenfalls nahezu unmöglich. Auch eine Kontrolle der Parallelität von Außenradiusmittellinie zur Mittellinie des Innenradius ist mit den derzeit zur Verfügung stehenden Mitteln nicht oder nur mit außerordentlich hohem Aufwand möglich.

Dickenmessergebnisse werden einzeln erfasst und sind daher nur schwierig den jeweiligen Messpunkten zugeordnet. Aufgrund der Lage der Messpunkte kann außerdem nicht sichergestellt werden, dass der Randabstand korrekt eingehalten ist, so dass eventuell falsche Maße dokumentiert werden.

Ein Verfahren gemäß dem Oberbegriff des Patentanspruchs 1 und eine Vorrichtung gemäß dem Oberbegriff des Patentanspruchs 2 sind in der US 4,107,849 A behandelt. Zum Prüfen der Dickenverhältnisse zwischen den Ober- und Unterseiten eines Bremsbelages sind um eine Achse (22) verschwenkbare Messsonden (38-34 bzw. 40-46) vorgesehen, die entlang der Innenfläche eines auf Stützzylindern (70, 74) abgestützten Bremsbelags (46) entlang geführt werden. Es sind weiterhin Taster (38, 40) vorgesehen, die entlang der Innenfläche (68) des Bremsbelags in Abhängigkeit von Dickenfehlern des Bremsbelags relativ zu den Messsonden bzw. Messanzeigern (34, 36) verschiebbar sind.

Der Erfindung liegt die Aufgabe zugrunde, ein insbesondere gegenüber der US 4,107,849 A verbessertes Verfahren und auch eine entsprechend verbesserte Vorrichtung zu schaffen, mit denen es möglich ist, möglichst gleichzeitig eine Vielzahl funktions- und montagerelevanter Merkmale des Trommelbremsbelags zu prüfen bzw. zu untersuchen, wobei es möglich sein soll, auch die ladegenauen Anordnungen des Bohrbildes eines Bremsbelags zu prüfen bzw. zu untersuchen.

Zur Lösung dieser Aufgabe wird erfindungsgemäß ein Verfahren gemäß Patentanspruch 1 vorgeschlagen, wodurch es auch möglich ist, zusätzlich die lagegenaue Anordnung des Bohrbildes im Bremsbelag zu prüfen.

Bezüglich der Vorrichtung wird auf den Patentanspruch 2 hingewiesen, sowie auf die in den Ansprüchen 3 bis 8 behandelten zusätzlichen Merkmale, die weitere Ausgestaltungen der Erfindung zum Inhalt haben.

Die Erfindung wird im folgenden anhand der Zeichnung näher beschrieben:
Figur 1 zeigt in schematisierter isometrischer Darstellung die erfindungsgemäße Prüfvorrichtung vor dem Auflegen eines Bremsbelages;
Figur 2 zeigt die Vorrichtung mit aufgelegtem Bremsbelag;
Figur 3 ist eine zeichnerische Darstellung zum Begriff "Dickenverhältnis"

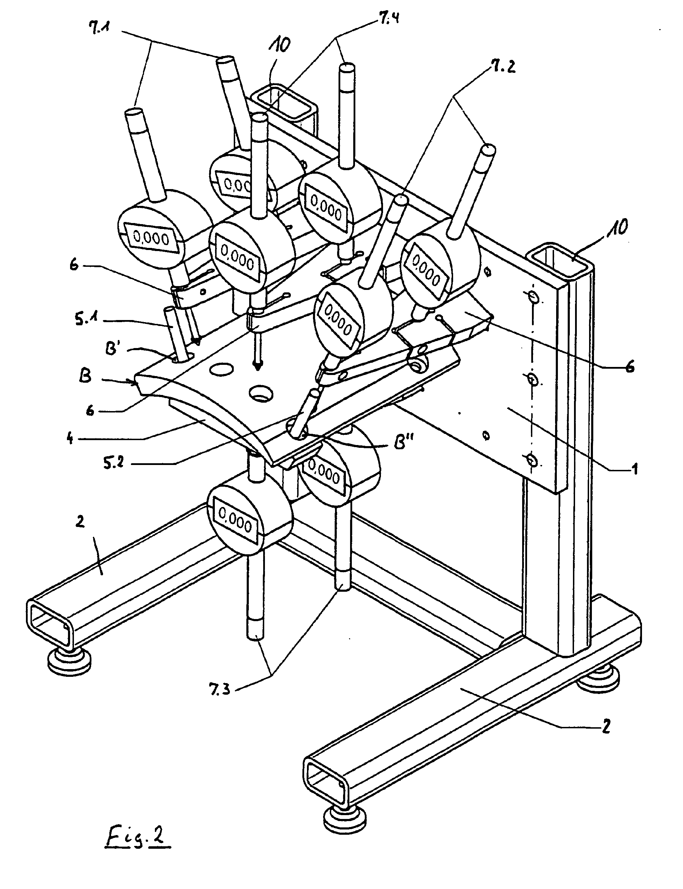

Die erfindungsgemäße Prüfvorrichtung enthält ein auf dem Boden abstellbares Gestell (2), zwei Säulen (10) und eine an Säulen (10) befestigte Montageplatte (1). An dieser Montageplatte (1) sind zwei horizontal in gleicher Höhe und parallel zueinander liegende Stützträger (3) mit bogenförmig gestalteter Oberseite, vorzugsweise Stützzylinder gleichen Durchmessers, befestigt. Der Abstand zwischen den Stützzylindern (3) ist so gewählt, dass der aufzulegende Bremsbelag (B) (siehe Figur 2) genau linienförmig im Bereich von Messstellen für die Dickenmessungen auf den Stützzylindern aufliegt. Die vorderen Enden der Stützzylinder (3) sind durch einen Riegel (4) verbunden, in dem zwei Bohrbuchsen (4.1) befestigt sind. Die Winkellage und der Abstand der Bohrbuchsen (4.1) zueinander sowie zu den Stützzylindern (3) sind so gewählt, dass die Mittellinien der äußeren Nietbohrungen (B' und B") eines auf die Stützzylinder (3) aufgelegten Trommelbremsbelages (B) mit den Mittelachsen der Bohrbuchsen (4.1) übereinstimmen.

Ein auf die Stützzylinder (3) sowie den Riegel (4) aufgelegter Bremsbelag (B) kann durch Einstecken eines Absteckstiftes (5.1) durch die Nietbohrung (B') und die darunter befindlichen Bohrbuchse (4.1) in seiner Lage auf der Vorrichtung positioniert und fixiert werden. Der Durchmesser des Absteckstiftes (5.1) ist mit geringem Passungsspiel an den Durchmesser der Nietbohrung (B') und der Bohrbuchse (4.1) angepasst, derart, dass der Absteckstift mit geringer Handkraft eingesteckt werden kann.

Für die Ermittlung der relevanten Bremsbelagmaße sind vorzugsweise acht Messuhren (7.1, 7.2, 7.3, 7.4) vorgesehen, die an vier Haltern (6') jeweils paarweise oberhalb und unterhalb der Stützzylinder (3) gelagert sind. Die Messuhren sollten vorzugsweise einen Tasthub von mindestens 50 mm aufweisen, wobei eine Anhebung der Tastspitzen der Messuhren durch Vakuum vorteilhaft ist, um eine gleichmäßige und gleichzeitige Anhebung der Tastspitzen der Messuhren zu ermöglichen, die in Tastrichtung, d.h. in Richtung einer aufgelegten Bremsplatte (B), vorzugsweise federbelastet sind.

Oberhalb jedes Stützzylinders (3) sind jeweils Messuhren (7.1 bzw. 7.2) so hintereinander positioniert, dass ihre Messachsen senkrecht zur Stützzylinderachse und senkrecht zur Tangente der Auflagelinie eines Bremsbelags auf den Stützzylindern (3) stehen. Die Messausstattung wird vervollständigt durch zwei unterhalb und mittig zwischen den Stützzylindern angeordnete Messuhren (7.3) sowie zwei oberhalb und mittig zwischen den Stützzylindern (3) angeordnete Messuhren (7.4).

Zur Kalibrierung der mittleren Messuhren (7.3 und 7.4) dient weiterhin eine auf die Stützzylinder (3) auflegbare Kalibrierplatte (8) - siehe auch Figur 2 -, deren Ober- und Unterseiten planparallel zueinander liegen. Die Prüfung bzw. Messung einschließlich der Vorbereitung der Prüfung erfolgt in folgender Weise:

### I. Vorbereitung

- die Messuhrtastspitzen werden mittels Vakuum nach oben bewegt:
- die Kalibrierplatte (8) wird auf die Stützzylinder (3) aufgelegt;
- die Tastspitzen der Messuhren werden gegen die Kalibrierplatte (8) bzw. in radialer Richtung gegen die Stützzylinder (3) zur Anlage gebracht;
- die Messuhren werden auf Null gestellt;
- die Tastspitzen werden unter Vakuumeinfluss von der Kalibrierplatte bzw. den Stützzylindern weg bewegt;
- die Vorrichtung ist betriebsbereit;

### II. Prüfvorgang

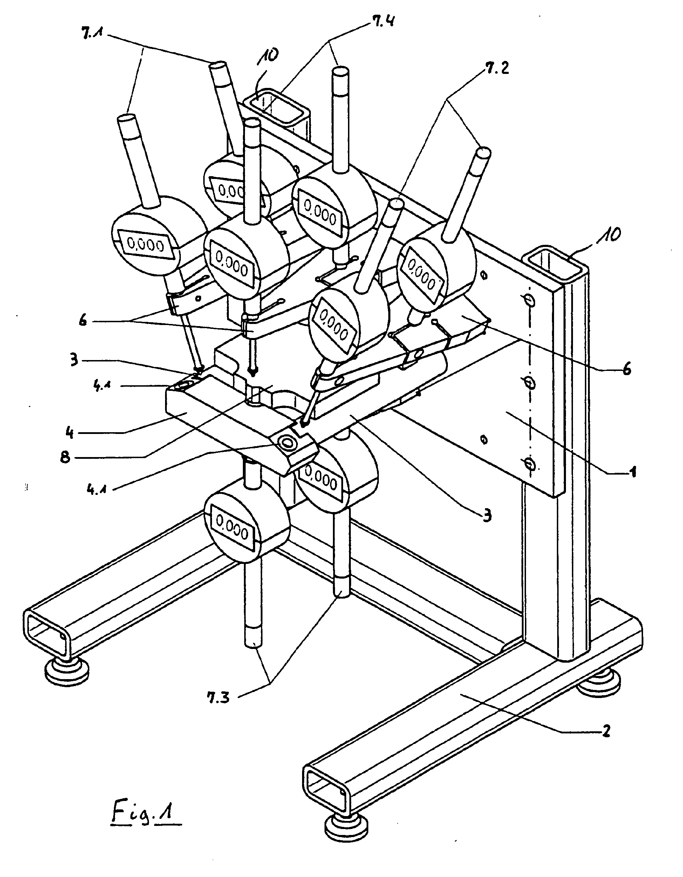

Der zu prüfende Bremsbelag (B) wird so auf die Stützzylinder (3) aufgelegt, dass die vordere linke Nietbohrung (B') achsgleich über der in Figur 1 dargestellten linken Bohrbuchse (4.1) liegt. Durch Einstecken des linken Absteckstiftes (5.1) wird der Bremsbelag auf der Vorrichtung positioniert. Danach werden alle Messuhrtastspitzen gegen den Bremsbelag (A) zur Anlage gebracht. Die angezeigten Werte müssen innerhalb vorgegebener Toleranzen liegen, um den Bremsbelag zu akzeptieren. Dabei zeigen die oberen äußeren Messuhren (7.1 bzw. 7.2) die Dicke des Bremsbelags an den jeweiligen Messstellen an; die mittig zwischen den Stützzylindern (3) liegenden Messuhren (7.3 bzw. 7.4) zeigen die Bogenhöhe des Innenradius (unten) und die Bogenhöhe des Außenradius (oben) an. Dabei ist zu berücksichtigen, dass die angezeigten bzw. gemessenen Werte nicht den Maßen der Fertigungszeichnung entsprechen, so dass die Toleranzbereiche für die einzelnen Messuhrreihen mathematisch oder zeichnerisch ermittelt und festgelegt werden. Wenn alle Anzeigewerte innerhalb der Toleranzen liegen, ist die Geometrie des Belags sowohl funktions- als auch montagegerecht gefertigt.

Zur Prüfung der Lage der Nietbohrungsreihen bezogen auf die Radienachse wird die rechts liegende Nietbohrung (B") bei weiterhin gegen den Bremsbelag (B) anliegenden Tastspitzen der Messuhren zusätzlich durch Einstecken des zweiten Absteckstiftes (5.2) in die Nietbohrung (B") und die darunter befindliche Bohrbuchse (4.1) abgesteckt. Für den Fall, dass die Bohrungsreihe senkrecht zur Radienachse liegt, stellt sich keine Veränderung an den Messuhren ein. Sollten die Messuhren nach dem Einstecken des zweiten Absteckstiftes (5.2) geänderte Werte anzeigen, bedeutet dieses eine Drehung des Bremsbelages um den linken Absteckstift (5.1), wodurch angezeigt ist, dass die Bohrungsreihe nicht optimal senkrecht zur Radienachse liegt.

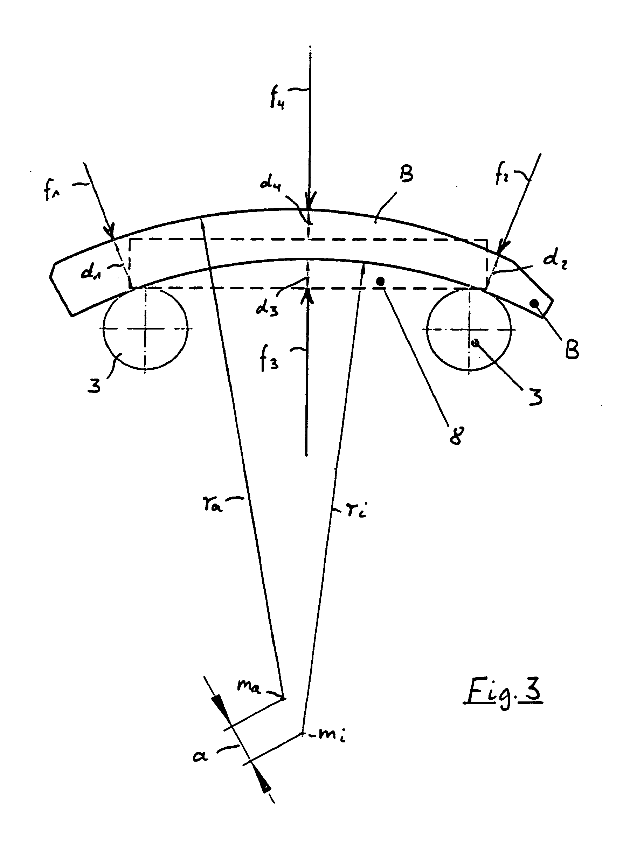

Figur 3 zeigt einen auf den beiden Stützzylindern (3) liegenden Bremsbelag (B) sowie gestrichelt dargestellt die zu Kalibrierzwecken auf die Stützzylinder auflegbare Kalibrierplatte (8). Das Dickenverhältnis zwischen den Ober- und Unterseiten des Bremsbelages (B) ist bestimmt durch den Abstand a zwischen den Mittellinien mᵢ und mₐ des Innenradius rᵢ und des Außenradius rₐ, woraus sich die unterschiedlichen Dicken d₁ und d₂ des Bremsbelages (B) ergeben. Die Dicken d₃ und d₄ zeigen die Bogenhöhen der Innen- und Außenradien rᵢ und r ₐ an. Die Pfeile f₁, f₂, f₃ und f₄ zeigen die Bewegungsrichtungen der Tastspitzen der jeweiligen Messuhren an.

Wie dargestellt erfolgt die Abstandsmessung mit Tastern ausgerüsteten Messuhren.

Alternativ können die Abstandsmessungen auch z.B. mittels Lasermessmethoden oder pneumatischen Messdüsen erfolgen.

Die Vorrichtung kann auch für alternative Anwendungsmöglichkeiten benutzt werden, nämlich:
- die axiale Festlegung des Bremsbelages ist auch durch andere Maßnahmen möglich, z.B durch Anlegen an die Montageplatte (1);
- die radiale Festlegung kann vorzugsweise bei Belägen ohne Nietbohrung auch durch eine zusätzliche seitliche Anlagesäule bzw. -kante erfolgen, wobei dann auch der Riegel (4) entfallen kann, jedoch mit dem Nachteil, dass dann keine Überprüfung des Bohrbildes möglich ist;
- durch Anschließen der Messuhren an ein EDV-System können aus den gemessenen Abstandswerten auch die tatsächlichen Innen- und Außenradien berechnet werden;
- bei entsprechend kürzeren oder längeren Bremsbelägen kann je Messreihe auch eine andere Anzahl von Messuhren, jedoch mindestens zwei Messuhren eingesetzt werden;
- sollten in bestimmten Fällen einzelne Werte nicht ermittelt oder berücksichtigt werden, können einzelne Messuhren oder Messreihen demontiert werden, ohne die anderen Messergebnisse zu beeinflussen.

## Patentansprüche

1. Verfahren zum Prüfen der Maßgenauigkeiten von Trommelbremsbelägen in Bezug auf die vorgegebenen Dickenmaße und Referenzwerte für die Innen- und Außenradien mit folgenden Einzelschritten:
a) Justieren mehrerer Abstands-Messsonden relativ zu Bezugsmesspunkten einer Prüfvorrichtung ;
b) Auflegen des Bremsbelages auf eine Stützeinrichtung der Prüfvorrichtung, und
c) Messung der Abstände vorgegebener Messpunkte am Bremsbelag relativ zu den Bezugsmesspunkten der Prüfvorrichtung,
**gekennzeichnet durch** folgende zusätzliche Schritte, um auch die lagegenaue Anordnung des Bohrbildes im Bremsbelag zu prüfen:
b1) anschließend auf den Schritt (b) ein lagegenaues Positionieren des Bremsbelages (B) **durch** Ausrichten einer ersten Nietbohrung (B') des Bohrbildes des Bremsbelages (B) relativ zu einem dem ordnungsgemäßen Bohrbild entsprechenden Referenzpunkt der Prüfvorrichtung, sowie anschließend an Schritt (c)
d) Fixieren mindestens einer zweiten Nietbohrung (B") des Bremsbelages (B) relativ zu einem zweiten, dem ordnungsgemäßen Bohrbild entsprechenden Referenzpunkt;
e) erneute Abstandsmessung gemäß Schritt (c) zur Verifizierung, ob die erneute Abstandsmessung zu veränderten Werten als bei der ersten Abstandsmessung führt.

2. Vorrichtung zum Prüfen von Trommelbremsbelägen, enthaltend zwei parallel zueinanderliegende Stützzylinder zum Abstützen eines Trommelbremsbelages (B) sowie mehrerer Messuhren zur Messung des Abstandes vorgegebener Messpunkte am Bremsbelag relativ zu Bezugsmesspunkten an der Prüfvorrichtung, **dadurch gekennzeichnet, dass** die Stützzylinder (3) zur linienförmigen Auflage der Innenfläche eines Bremsbelages horizontal ausgerichtet in gleicher Höhe liegen, dass eine Einrichtung (4; 4.1; 5.1) zum Positionieren des Bremsbelags (B) entsprechend der Anordnung des Bohrbildes des Bremsbelags vorgesehen, und dass die Einrichtung (4; 4.1; 5.1) einen Querriegel (4) mit zwei Bohrbuchsen (4.1) enthält, deren Abstand voneinander und deren Bohrungsachsen-Winkelstellung zueinander und zu den Stützzylindern (3) so gewählt sind, dass die Achsen der äußeren Nietbohrungen (B' bzw. B") eines auf die Stützzylinder aufgelegten, ordnungsgemäßen Bremsbelages (B) mit den Mittelachsen der Nietbohrungen übereinstimmen, derart, dass durch Einstecken eines ersten Absteckstiftes durch die Nietbohrung (B') und die darunter befindliche Bohrbuchse (4.1) der aufgelegte Bremsbelag (B) positioniert und durch Einstecken eines zweiten Absteckstiftes (5.2) in die weitere Nietbohrung (B") und die darunter befindliche Bohrbuchse (4.1) das ordnungsgemäße Bohrbild des Bremsbelags verifizierbar bzw. überprüfbar ist.

3. Vorrichtung nach Anspruch 2, **dadurch gekennzeichnet, dass** die Stützzylinder (3) die Form von Stützzylindern gleichen Durchmessers haben, und dass mindestens einem Stützzylinder (3) mindestens zwei hintereinander liegende Messuhren (7.1 bzw. 7.2) zugeordnet sind, deren Messachsen senkrecht zur Stützzylinderachse und senkrecht zur Tangente der Auflagelinie des Bremsbelages auf den Stützzylindern (3) liegen.

4. Vorrichtung nach Anspruch 3, **gekennzeichnet durch** mindestens zwei oberhalb und mittig zwischen den Stützzylindern (3) angeordnete Messuhren (7.4), deren Messachsen senkrecht zu einer **durch** die Achsen der Stützzylinder (3) bestimmten Horizontalebene liegen.

5. Vorrichtung nach Anspruch 3 oder 4, **gekennzeichnet durch** zwei unterhalb und mittig zwischen den Stützzylindern (3) angeordnete Messuhren (7.3), deren Messachsen senkrecht zu einer **durch** die Achsen der Stützzylinder (3) bestimmten Horizontalachse liegen.

6. Vorrichtung nach einem der Ansprüche 3 bis 5, **gekennzeichnet durch** je zwei oberhalb und unterhalb mittig zwischen den Stützzylindern (3) angeordnete Messuhren (7.4; 7.3), deren Messachsen senkrecht zu einer **durch** die Achsen der Stützzylinder (3) bestimmten Horizontalebene liegen.

7. Vorrichtung nach einen der Ansprüche 2 bis 6, **dadurch gekennzeichnet, dass** sie eine auf die Stützzylinder (3) auflegbare Kalibrierplatte (8) mit planparallelen Ober- und Unterseiten zum Kalibrieren der Messuhren aufweist.

8. Vorrichtung nach einem der Ansprüche 2 bis 7, **dadurch gekennzeichnet, dass** sie mindestens einen zylindrischen Absteckstift (5.1) enthält, dessen Durchmesser den Innendurchmesser der Bohrbuchsen (4.1) und der während der Prüfung über den Bohrbuchsen liegenden Nietbohrungen (B'; B") des Bremsbelages (B) entsprechen.

## Claims

1. Method for testing the degree of accuracy of drum brake linings in relation to preset thickness dimensions and reference values of the inside and outside radii comprising the following steps:
(a) adjusting several distance measuring probes in relation to reference measuring points of a testing device ;
(b) applying the brake lining to a supporting device of the testing device ;
(c) measuring the distances of preset measuring points of the brake lining
in relation to the reference measuring points of the testing device, characterized, for also testing the position accuracy of the hole pattern of the brake lining, by the following additional steps:
b1) following to step (b), accurately positioning the brake lining (B) by adjusting of a first rivet bore hole (B') of the hole pattern of the brake lining (B) in relation to a reference point of the testing device correctly complying with the hole pattern, and, following to step (c),
d) fixing at least a second rivet bore hole (B") of the brake lining (B) in relation to a second reference point correctly complying with the hole pattern ;
e) re-measuring the distance according to step (c) in order to verify, whether the re-measuring step brings forth modified values than the first distance measuring.

2. Apparatus for testing drum brake linings comprising two support cylinders being arranged parallel to each other for supporting a drum brake lining (B) and several measuring probes for measuring the distance of preset measuring points of the brake lining in relation to reference measuring points of the testing apparatus, **characterized in that**, the supporting cylinders (3) are aligned horizontally at the same height for supporting the interior surface of a brake lining along a line of it, that a device (4; 4.1; 5.1) for positioning the brake lining (B) according to the arrangement of the hole pattern is provided, and **in that** the device (4; 4.1; 5.1) comprises a cross-bar (4) with two drill bushings (4.1), the distance between them and the angularity of the axes of them and the support cylinders (3) being chosen such, that the axes of the outer rivet bore holes (B' respectively B") of a correct brake lining (B) positioned onto the support cylinders complys with the center axes of the rivet bore holes, such that by insertion of a first pin into the rivet bore hole (B') and through the drill bushing (4.1) lying beneath of the rivet bore hole (B') the brake lining (B) is positioned and by insertion of a second pin (5.2) into the further rivet bore hole (B") and through the drill bushing (4.1) lying beneath the correct hole pattern of the brake lining is verifiable and checkable, respectively.

3. Apparatus according to claim 2 **characterized in that** the support cylinders (3) have the same diameter and that at least one support cylinder (3) is provided with at least two indicating calipers (7.1 and 7.2, resprectively) lying one after the other, the measuring axes of which being positioned vertically to the axis of the support cylinder and vertically to the tangent of the line of contact of the brake lining with the support cylinders (3).

4. Apparatus according to claim 3, **characterized by** at least two indicating calipers (7.4) arranged above and centrally between the supporting cylinders (3), the measuring axes of the indicating calipers (7.4) being arranged vertically to a horizontal plane determined by the axes of the supporting cylinders (3).

5. Apparatus according to claim 3 or claim 4, **characterized by** two indicating calipers (7.3) arranged beneath of and centrally between the supporting cylinders (3), the measuring axes of the indicationg calipers being arranged vertically to a horizontal plane determind by the axes of the supporting cylinders (3).

6. Apparatus according to one of the claims 3 to 5, **characterized by** two indicating calipers (7.4; 7.3), respectively being arranged above and below centrally between the supporting cylinders (3), the measuring axis of the indicating calipers being arranged vertically to a horizontal plane determined by the axis of the supporting cylinders (3).

7. Apparatus according to one of the claims 2 to 6, **characterized in that** it contains a calibrating plate (8) containing plan-parallel upper and lower surfaces and being positionable on the supporting cylinders (3).

8. Apparatus according to one of the claims 2 to 7, **characterized in that** it contains at least on cylindrical pin (5.1), the diameter of which corresponds to the inside diameters of the drilling bushes (4.1) and the rivet bore holes (B'; B") of the brake lining (B) being positioned above the drill bushings during the testing action.

## Revendications

1. Procédé pour contrôler la précision dimensionelle des garnitures frein à tambour par rapport aux mesures d'épaisseur et valeurs de référence données des rayons intérieurs et extérieurs contenant les pas suivants :
(a) ajuster plusieures sondes de mesure pour mesurer la distance par rapport aux points de mesure de référence d'un appareil de contrôle ;
(b) mettre la garniture de frein sur un élément d'appui de l'apparail de contrôle, et
(c) mesurer les distances des points de mesure donnés de la garniture de frein par rapport aux points de mesure de référence de l'apparail de contrôle,
**caractérisé par**, pour contrôler aussi le positionement exact de la figuration d'alésage de la garniture de frein, des pas additionels suivants :
b1) ensuite au pas (b) un positionement exact de la garniture de frein (B) par alignement d'un premier alésage de rivet (B') de la figuration d'alésage de la garniture de frein par rapport à un point de référence de l'apparail de contrôle correspondant à une figuration d'alésage exacte et ensuite au pas (c)
d) fixer au moins un second alésage de rivet (B") de la garniture de frein par rapport à un second point de référence correspondant à la figuration d'alésage exacte
e) mesurer de nouveau la distance correspondant au pas (c) pour vérifier si ce second mesurage de distance resulte des valeurs differentes que le premier mesurage de distance.

2. Apparail pour côntroler des garnitures frein à tambour comprennant deux cylindres de support arrangés parallélement l'un à l'autre pour supporter une garniture frein à tambour (B) ainsi que plusieures sondes de mesure pour mesurer la distance entre points de mesure donnés de la garniture frein par rapport aux points de mesure de référence de l'apparail de contrôle, **caractérisé en ce, que** les cylindres de support (3) pour supporter la face intérieure de la garniture frein le long d'une ligne sont arrangés horizontalement alignés à la même hauteur, qu'un dispositif (4; 4.1; 5.1) est prévu pour positioner la garniture frein conformement à l'arrangement de la figuration d'alésage de la garniture frein, et que le dispositif (4; 4.1; 5.1) contient une barre transversale (4) avec deux douilles d'alésage (4.1), la distance entre les deux douilles et la position angulaire des axes de l'alésage l'une à l'autre et par rapport aux cylindres de support (3) est choisie de sorte que les axes des alésages de rivet extérieurs (B' et B", respectivement) d'une garniture frein (B) supportée exactement par les cylindres de support correspondent aux axes des alésages de rivet, de sorte, que par introduction d'une première cheville dans l'alésage de rivet (B') et dans la douille d'alésage (4.1) en-dessous la garniture frein (B) est positionnée et par introduction d'une seconde cheville (5.2) dans la seconde l'alésage de rivet (B") et dans la douille d'alésage (4.1) en-dessous la exacte figuration d'alésage de la garniture frein est vérifiable et révisable, réspectivement.

3. Apparail selon la revendication 2, **caractérisé en ce que** les cylindres de support (3) ont le même diametre et qu'au moins un cylindre de support (3) est muni des deux sondes de mesure (7.1 et 7.2, respectivement) arrangées l'une après l'autre, les axes de mesure duquels sont arrangés verticalement par rapport à l'axe du cylindre de support (3) et verticalement par rapport à la tangente de la ligne de support de la garniture frein sur les cylindres de support (3).

4. Apparail selon la revendication 3, **caractérisé par** au moins deux sondes de mesure (7.4) qui sont arrangées au-dessus de et centralement entre les cylindres de support (3), les axes des sondes de mesure (7.4) sont arrangés verticalement par rapport au plan horizontal déterminé par les axes des cylindres de support (3).

5. Apparail selon la revendication 3 ou la revendication 4, **caractérisé par** deux sondes de mesure (7.3) arrangées au-dessous de et centralement entre les cylindres de support (3), les axes des sondes de mesure sont arrangés verticalement par rapport au plan horizontal déterminé par les axes des cylindres de support (3).

6. Apparrail selon l'une des revendications 3 à 5, **caractérisé par** deux sondes de mesure (7.4 ; 7.3) arrangées au-dessus et aussi au-dessous de et centralement entre les cylindres de support (3), les axes des sondes de mesure (7.4, 7.3) sont arrangées verticalement par rapport au plan horizontal déterminé par les axes des cylindres de support (3).

7. Apparail selon l'une des revendications 2 à 6, charactérisé en ce qu'il contient une plate de callibrage (8) qui est munie avec des surfaces supérieures à face planes et paralléles et qui peut être mise sur les cylindres de support (3).

8. Apparail selon l'une des revendications 2 à 7, charactérisé en ce qu'il contient au moins une cheville cylindrique (5.1), le diamètre de laquelles correspond aux diamètres intérieurs des douilles d'alésage (4.1) et aussi aux diamètres intérieurs des alésages de rivet (B' ; B") de la garniture frein (B) qui sont arrangés au-dessus des douilles d'alésage pendant le contrôle.
